# EUROPEAN PATENT APPLICATION

(11) **EP 4 653 115 A1**
(43) Date of publication of application: **26.11.2025**
(21) Application number: 25177641.5
(22) Date of filing: 20.05.2025
(51) Int. Cl.: B23K 9/095, B23K 9/167, B23K 9/29, B23K 9/32

(54) **TIG TORCH TRACKING ATTACHMENTS FOR WELDING TECHNIQUE MONITORING SYSTEMS**

(30) Priority: 20.05.2024 US 202463649629 P; 16.05.2025 US 202519210324
(71) Applicant: Illinois Tool Works Inc., Glenview IL 60025 (US)
(72) Inventor: BECKER, William Joshua, Glenview, 60025 (US); KOPAC III, Jordan J., Glenview, 60025 (US); BEATHAM, Benjamin, Glenview, 60025 (US)
(74) Representative: HGF

(57) **Abstract**

Some examples of the present disclosure relate to tracking attachments (200) that allow trackable markers (299) to be easily attached to TIG welding torches (100), thereby removing the need for costly customized/modified TIG welding torches. In some examples, each tracking attachment (200) includes one or more trackable markers (299) that can be detected and/or tracked by a monitoring system (450). In some examples, the trackable marker(s) (299) of the tracking attachment (200) facilitate tracking and/or monitoring of welding technique by aiding in the tracking/monitoring of the position(s) and/or orientation(s) of the TIG welding torch (100) during welding-type operations.

## Description

### CROSS REFERENCE TO RELATED APPLICATIONS

This application claims priority to, and the benefit of, U.S. Provisional Application No. 63/649,629, filed May 20, 2024, entitled "Tracking Attachments for Stick and TIG Portable Welding Technique Monitoring Systems," the entire contents of which are hereby incorporated by reference.

### TECHNICAL FIELD

The present disclosure generally relates to welding technique monitoring systems, and, more particularly, to TIG torch tracking attachments for welding technique monitoring systems.

### BACKGROUND

Welding technique generally refers to the way in which a welding operator positions, moves, and/or manipulates a welding torch during a welding operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to TIG torch tracking attachments for welding technique monitoring systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIGS. 1a-1b show exploded and assembled views of an example tungsten inert gas (TIG) welding torch, in accordance with aspects of this disclosure.
FIGS. 2a-2b show examples of a TIG torch tracking attachment configured for attachment to the TIG welding torch of FIG. 1, in accordance with aspects of this disclosure.
FIGS. 3a-3b show examples of the TIG torch tracking attachment of FIGS. 2a-2b being attached to the TIG welding torch of FIGS. 1a-1b, in accordance with aspects of this disclosure.
FIG. 4 shows an example of a welding-type system in which a tracking/monitoring system may be used to track the TIG welding torch of FIGS. 1a-1b by tracking the TIG torch tracking attachment of FIGS. 2a-2b, in accordance with aspects of this disclosure.
FIGS. 5-8 show examples of alternative TIG torch tracking attachments, in accordance with aspects of this disclosure.

The figures are not necessarily to scale. Where appropriate, the same or similar reference numerals are used in the figures to refer to similar or identical elements.

### DETAILED DESCRIPTION

Some examples of the present disclosure relate to tracking attachments that allow trackable markers to be attached to tungsten inert gas (TIG) welding torches, thereby removing the need for costly customized and/or modified TIG welding torches. In some examples, a TIG torch tracking attachment includes one or more trackable markers that can be detected and/or tracked by a monitoring system. In some examples, the trackable marker(s) of the tracking attachment facilitate tracking and/or monitoring of the position(s) and/or orientation(s) of the TIG welding torch during welding-type operations (e.g., Gas Tungsten Arc Welding (GTAW) operations).

Some examples of the present disclosure relate to a tracking attachment for a tungsten inert gas (TIG) torch, the tracking attachment comprising: a torch mount integrated with, or configured for connection to, a back cap of the TIG torch, the torch mount comprising a trackable marker configured for detection by a tracking system.

In some examples, the trackable marker is attached to the torch mount via an adhesive or a fastener, or the trackable marker is etched onto the torch mount. In some examples, the torch mount is integrated with, or configured for connection to, the back cap of the TIG torch such that the back cap extends through an approximate center of the torch mount, thereby making the torch mount concentric with the back cap and concentric with a tungsten tip of the TIG torch. In some examples, the torch mount comprises an internal passage defined by a passage wall, the back cap extending through the internal passage when the torch mount is connected to the back cap.

In some examples, the passage wall comprises a rubber material, such that the torch mount passage wall can bend or deform to accommodate larger back caps, or the tracking attachment further comprises a torch mount fastener that secures the torch mount to the back cap. In some examples, the torch mount comprises a first torch mount, the tracking attachment further comprising a second torch mount, the second torch mount also being integrated with, or configured for connection to, the back cap of the TIG torch. In some examples, the first torch mount comprises a first end wall and three or more first sidewalls, the second torch mount comprises a second end wall and three or more second sidewalls, and the first torch mount is rotationally offset from the second torch mount about a central axis of the first torch mount or second torch mount, such that none of the three or more first sidewalls extend parallel to any of the three or more second sidewalls.

Some examples of the present disclosure relate to a tungsten inert gas (TIG) torch, comprising: a torch handle; a torch neck connected to the torch handle; a torch head connected to the torch neck; a tungsten electrode positioned at least partially within, and extending from a first side of, the torch head; a back cap connected to, and extending from, a second side of the torch head, opposite the first side, the back cap being concentric with the tungsten electrode; and a torch mount integrated with, or connected to, the back cap, the torch mount comprising a trackable marker configured for detection by a tracking system.

In some examples, the trackable marker is attached to the torch mount via an adhesive or a fastener, or the trackable marker is etched onto the torch mount. In some examples, the torch mount is integrated with, or connected to, the back cap of the TIG torch such that the back cap extends through an approximate center of the torch mount, thereby making the torch mount concentric with the back cap and concentric with the tungsten tip of the TIG torch. In some examples, the torch mount comprises an internal passage defined by a passage wall, the back cap extending through the internal passage when the torch mount is connected to the back cap.

In some examples, the passage wall comprises a rubber material, such that the passage wall can bend or deform to accommodate larger back caps, or the TIG torch further comprises a torch mount fastener that secures the torch mount to the back cap. In some examples, the torch mount comprises a first torch mount, the tracking attachment further comprising a second torch mount, the second torch mount also being integrated with, or configured for connection to, the back cap of the TIG torch. In some examples, the first torch mount comprises a first end wall and three or more first sidewalls, the second torch mount comprises a second end wall and three or more second sidewalls, and the first torch mount is rotationally offset from the second torch mount about a central axis of the first torch mount or second torch mount, such that none of the three or more first sidewalls extend parallel to any of the three or more second sidewalls.

Some examples of the present disclosure relate to a welding system, comprising: a tracking attachment for a tungsten inert gas (TIG) torch, the tracking attachment comprising: a torch mount comprising a trackable marker that can be detected by a tracking system, the torch mount being integrated with, or configured for connection to, a back cap of the TIG torch.

In some examples, the torch mount is integrated with, or configured for connection to, the back cap of the TIG torch such that the back cap extends through an approximate center of the torch mount, thereby making the torch mount concentric with the back cap and concentric with a tungsten tip of the TIG torch. In some examples, the torch mount comprises an internal passage defined by a passage wall, the back cap extending through the internal passage when the torch mount is connected to the back cap, the passage wall comprising a rubber material, such that the passage wall can bend or deform to accommodate larger back caps, or the welding system further comprises a torch mount fastener that secures the torch mount to the back cap. In some examples, the torch mount comprises a first torch mount, the tracking attachment further comprising a second torch mount, the second torch mount also being integrated with, or configured for connection to, the back cap of the TIG torch.

In some examples, the welding system further comprises the TIG torch, the TIG torch comprising: a torch handle, a torch neck connected to the torch handle, a torch head connected to the torch neck, a tungsten electrode positioned at least partially within, and extending from a first side of, the torch head, and a back cap connected to, and extending from, a second side of the torch head, opposite the first side, the back cap being concentric with the tungsten electrode. In some examples, the welding system further comprises the tracking system, the tracking system comprising: a tracking sensor configured to capture tracking sensor data, processing circuitry configured to: analyze the tracking sensor data to identify a marker position or a marker orientation of the trackable marker, identify a tungsten electrode position or a tungsten electrode orientation of a tungsten electrode of the TIG torch based on the marker position or the marker orientation, determine a welding technique parameter based on the tungsten electrode position or the tungsten electrode orientation, and a user interface configured to output the welding technique parameter.

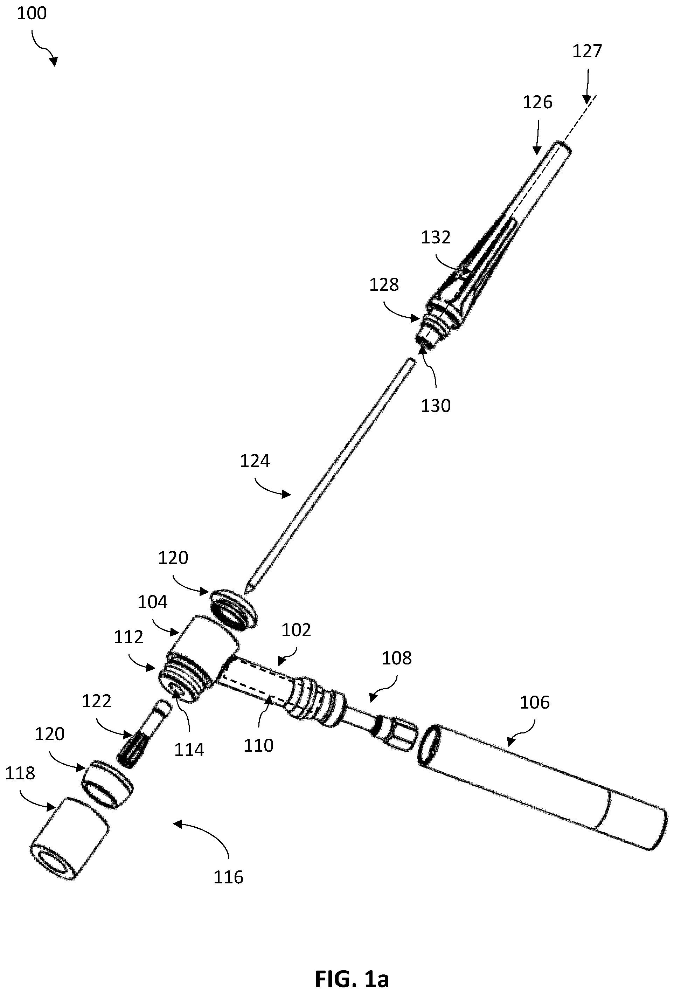

FIGS. 1a-1b show examples of a TIG torch 100. In some examples, the TIG torch 100 performs welding-type operations (e.g., via an electrical arc) on one or more workpieces 401. In some examples, the TIG torch 100 uses welding-type power (and/or shielding gas) provided by a welding-type power supply 402 to perform the welding-type operation(s).

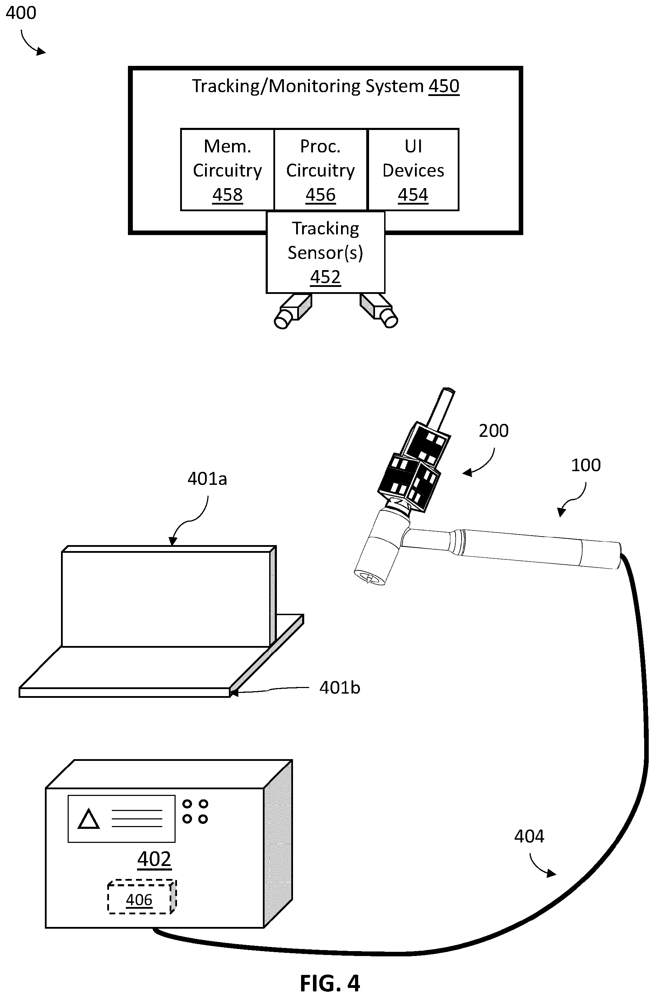

FIG. 4, for example, shows a welding-type system 400 in which the TIG torch 100 is connected to a welding-type power supply 402 via a torch cable 404. The welding-type power supply 650 is shown as including power conversion circuitry 406 configured to convert input power (e.g., from a generator, battery, mains power, etc.) to welding-type output power. In some examples, the torch cable 404 routes the welding-type output power (and/or shielding gas) from the welding-type power supply 402 to the TIG torch 100.

In the examples of FIGS. 1a-1b, the TIG torch 100 includes a torch neck 102 that connects a torch head 104 of the TIG torch 100 to a torch handle 106 of the TIG torch 100. In some examples, outer portions of the torch neck 102, torch head 104, and/or torch handle 106 are comprised of electrically insulating material (e.g., rubber). As shown, when assembled, an electrically conductive receptacle 108 is positioned within and/or encircled by the (e.g., electrically insulating) torch handle 106.

In some examples, the electrically conductive receptacle 108 of the TIG torch 100 is configured for electrical connection with an electrically conductive end, and/or exposed wiring of, the torch cable 404 (see, e.g., FIG. 4). In the example of FIG. 1a, the electrically conductive receptacle 108 is shown connecting to an electrically conductive torch neck interior 110 that extends through the (e.g., electrically insulating) torch neck 102.

Within the torch neck 102 and/or the torch head 104, the electrically conductive torch neck interior 110 connects to/with an electrically conductive torch head interior 112. The torch head interior 112 is shown positioned within, and/or extending partially from one side of, the (e.g., outer insulating) torch head 104. In the example of FIG. 1a, the electrically conductive torch head interior 112 is shown as being approximately cylindrical, with a torch head channel 114 extending through an approximate center of, and/or encircled by, the conductive torch head interior 112. In some examples, the electrically conductive receptacle 108 and electrically conductive torch neck interior 110 conduct welding-type electrical power to the electrically conductive torch head interior 112 (e.g. from the torch cable 404 and/or welding-type power supply 402).

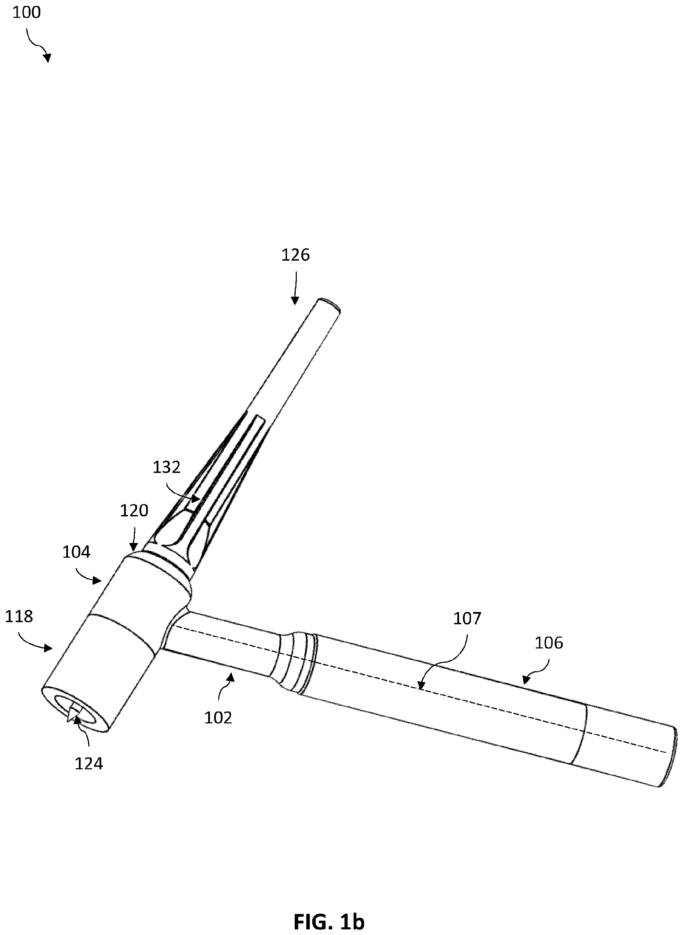

In the example of FIG. 1a, a nozzle assembly 116 comprised of a gas nozzle 118 and a (e.g., thermally insulating) heat shield 120 are shown connecting to the front side of the torch head 104 over the torch head interior 112. In the example of FIG. 1b,the gas nozzle 118 is shown covering both the torch head interior 112 and the heat shield 120. In the examples of FIGS. 1a-1b, another heat shield 120 is shown connected to the opposite/back side of the torch head 104.

In the example of FIG. 1a, the TIG torch 100 is further shown as including a collet body 122. In some examples, when assembled, part of the collet body 122 is positioned within the torch head interior 112 and/or torch head channel 114, while a remaining part extends out of the front side of the torch head 104 and/or torch head interior 112. In some examples, the collet body 122 is secured within the torch head channel 114 of the torch head interior 112 via engagement between screw threads on the outside of the collet body 122 and within the torch head channel 114 of the torch head interior 112.

In some examples, the collet body 122 includes a collet positioned within the collet body 122. In some examples, the collet body 122 (and/or collet) is comprised of an electrically conductive material. In some examples, the collet body 122 (and/or collet) conducts welding-type electrical power from the torch head interior 112 to a tungsten electrode 124 of the TIG torch 100.

In the example of FIG. 1a, the tungsten electrode 124 is shown as a relatively long and slim cylindrical rod, with a pointed tip. When the TIG torch 100 is assembled, the tungsten electrode 124 extends through the torch head channel 114 and collet body 122 (and/or collet). Depending on the desired stick out of the tungsten electrode, the tip of the tungsten electrode 124 may also extend out of the nozzle assembly 116 and/or gas nozzle 118 (e.g., as shown in FIG. 1b).

In some examples, the tungsten electrode 124 makes electrical contact with the collet body 122 (and/or collet) when extending through the collet body 122 (and/or collet). Through electrical contact with the collet body 122 (and/or collet), welding-type electrical power can be conducted to the tungsten electrode 124 (e.g., from and/or through the welding-type power supply 402, torch cable 404, receptacle 108, torch neck interior 110, and/or torch head interior 112).

In the example of FIGS. 1a-1b, the TIG torch 100 also includes a back cap 126. As shown, the back cap 126 connects to a back side of the torch head 104. In some examples, the tungsten electrode 124 is held at the front end of the TIG torch 100 by the collet body 122, and on the back end of the TIG torch 100 by the back cap 126.

In the example of FIG. 1a, the back cap 126 is shown as including a threaded portion 128 that can be inserted into the torch head channel 114. In some examples, the threads of the threaded portion 128 engage with complementary threads within (and/or encircling) the torch head channel 114 of the torch head interior 112. In some examples, the connection between the threaded portion 128 of the back cap 126 and the complementary threads of the torch head interior 112 serve to connect the back cap 126 to the torch head 104.

In the example of FIG. 1a, the back cap 126 is shown as having a back cap bore 130. In some examples, the back cap bore 130 extends through an approximate center of the back cap 126 (and/or along a central longitudinal axis 127 of the back cap 126). In some examples, when assembled, the back end of the tungsten electrode 124 extends through and/or is positioned in the back cap bore 130. Because the back cap bore 130 extends through an approximate center of the back cap 126 (and/or along a central longitudinal axis 127 of the back cap 126), and the tungsten electrode 124 is held in and/or extends through the central/centered back cap bore 130, in some examples, the back cap 126 is concentric with the tungsten electrode 124 when the TIG torch 100 is assembled.

In some examples, it is desirable to track and/or monitor the technique of an operator when the operator performs a welding-type operation using the TIG torch 100. In some examples, a monitoring system 450 can be used for this purpose. In FIG. 4, for example, the welding-type system 400 is shown as including a tracking and/or monitoring system 450 that is configured to track and/or monitor the technique of an operator when the operator performs a welding-type operation using the TIG torch 100.

In the example of FIG. 4, the monitoring system 450 is shown as including tracking sensors 452. In some examples, the tracking sensors 452 comprise one or more acoustic sensors, ultrasonic sensors, infrared (IR) sensors, IR projectors/detectors, near field communication (NFC) sensors, radio frequency identification (RFID) sensors, thermal sensors, optical sensors, and/or camera sensors. In some examples, the monitoring system 450 uses sensor data captured by the tracking sensor(s) 452 to track, monitor, and/or identify the technique (and/or technique parameters) of the operator when the operator performs a welding-type operation using the TIG torch 100.

In the example of FIG. 4, the monitoring system 450 is also shown as including user interface (UI) devices 454. In some examples, the UI devices 454 include input devices and/or output devices. Examples of input devices include touch screens, keyboards, microphones, buttons, knobs, levers, switches, dials, slides, and/or other input devices. Examples of output devices include display screens, speakers, lights, haptic devices, and/or other output devices. In some examples, operators (and/or others) are informed of tracked, monitored, and/or identified technique parameters via one or more outputs of the UI device(s) 454.

In the example of FIG. 4, the monitoring system 450 is further shown as including processing circuitry 456 and memory circuitry 458. In some examples, the processing circuitry 456 comprises one or more processors. In some examples, the processing circuitry 456 uses sensor data captured by the tracking sensor(s) 452 to track, monitor, and/or identify the technique (and/or technique parameters) of an operator when the operator performs a welding-type operation using the TIG torch 100. In some examples, one or more of the technique parameters are stored in memory circuitry 458. In some examples, technique parameters include a travel speed, travel direction, travel angle, work angle, arc length, and/or aim of the TIG torch 100 and/or tungsten electrode 124.

In some examples, in order for the monitoring system 450 to monitor technique (and/or technique parameters), the monitoring system 450 must track and/or monitor the position(s) and/or orientation(s) of (e.g., the tungsten electrode 124 of) the TIG torch 100 (e.g., relative to the workpiece(s) 401). In some examples, the technique parameters are determined based on the position(s) and/or orientation(s) of (e.g., the tungsten electrode 124 of) the TIG torch 100 (e.g., relative to the workpiece(s) 401). However, while, in some examples, the monitoring system 450 can use sensor data captured by one or more tracking sensors 452 to try and track the position(s) and/or orientation(s) of the TIG torch 100, such tracking can be a difficult task unaided.

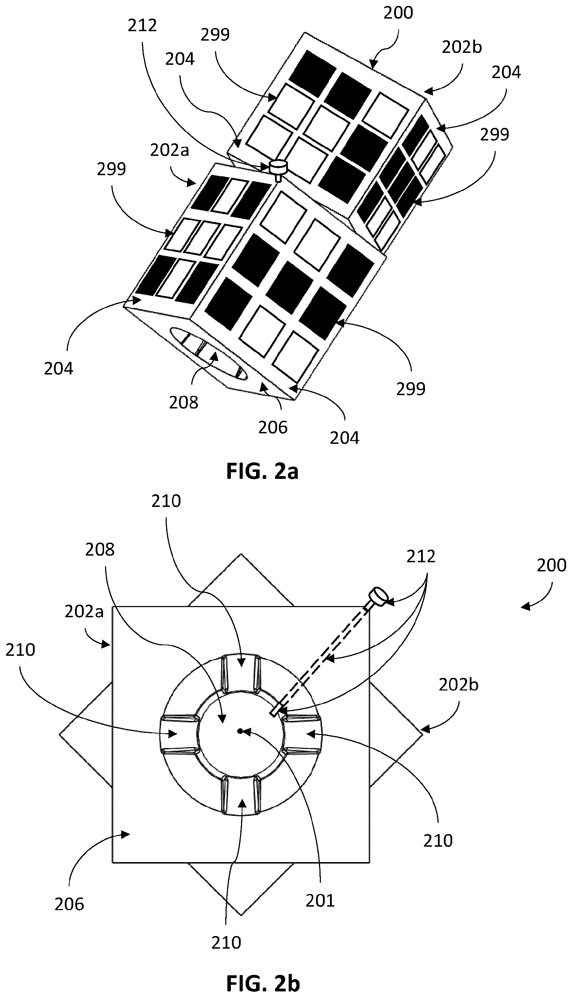

In some examples, trackable markers 299 (e.g., fiducial markers) can be used to aid in tracking position and/or orientation (see, e.g., FIG. 2a). For example, the markers 299 may be easily recognized and/or identified by the (e.g., processing circuitry 456 of the) monitoring system 450 in (e.g., image) sensor data captured by the tracking sensor(s) 452. Once identified, the position(s) and/or orientation(s) of the trackable markers 299 can be determined from the sensor data. And the position(s) and/or orientation(s) of (e.g., the tungsten electrode 124 of) the TIG torch 100 may be determined based on the determined position(s) and/or orientation(s) of the trackable markers 299 (and/or one or more known/measured/calibrated offsets).

However, in some examples, the trackable markers 299 require approximately flat and/or polygonal surfaces to be effectively displayed, recognized, and/or identified. Meanwhile, the outer surface of the TIG torch 100 is shown (e.g., in FIGS. 1a-1b) as being comprised of mostly curved and/or cylindrical surfaces. This can make it difficult to use trackable markers 299 to track many TIG torches 100 (barring some potentially expensive and/or rare customization(s) and/or modification(s)).

FIG. 2a shows examples of a TIG torch tracking attachment 200 that allows for trackable markers 299 to be easily attached to many (e.g., conventional and/or standard) TIG torches 100. In some examples, the TIG torch tracking attachment 200 is comprised of an electrically and/or thermally insulating material (e.g., rubber, wood, plastic, etc.).

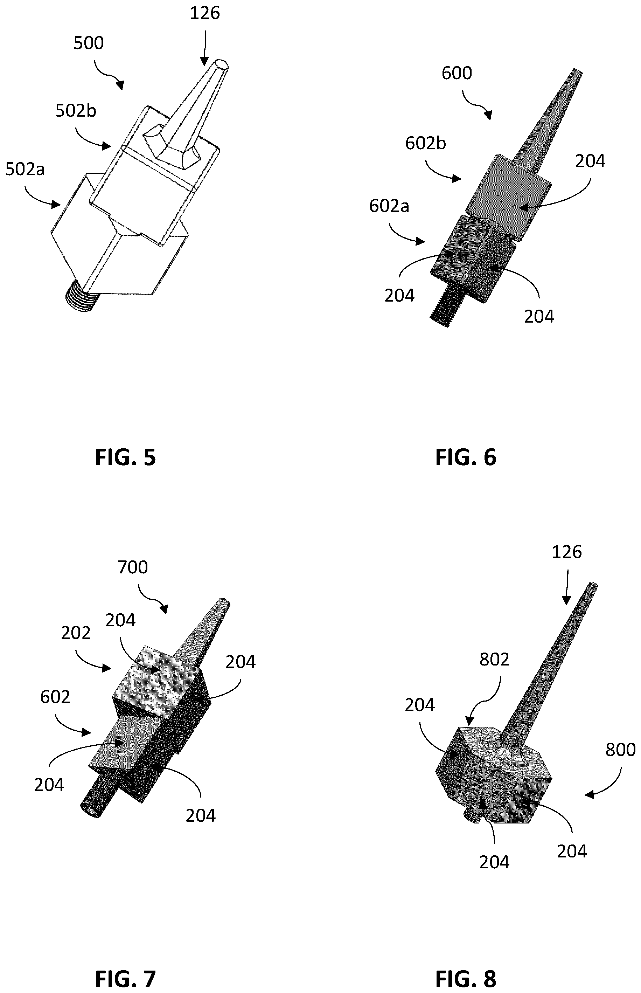

In the examples of FIGS. 2a-2b, the TIG torch tracking attachment 200 includes two torch mounts 202 stacked and/or connected end to end. Each torch mount 202 is shown as comprising a six faced cube (and/or hexahedron). In some examples, one or more of the torch mounts 202 may comprise a different shape, such as, for example, a triangular pyramid and/or four faced tetrahedron, a triangular prism and/or five faced hexahedron (e.g., as shown by the second and third alternative torch mounts 602, 702 of FIGS. 6-7), a seven faced heptahedron, and/or a hexagonal prism and/or eight faced octahedron (e.g., as shown by the fourth alternative torch mounts 802 of FIG. 8). In some examples, the torch mounts 202 may be stacked (and/or abutting, adjacent, contacting, etc.) but separate and/or unconnected.

In the examples of FIGS. 2a-2b, each torch mount 202 includes a different and/or unique trackable marker 299 on each sidewall 204. In some examples, the flat rectangular surfaces of the sidewalls 204 of the torch mounts 202 work well with trackable markers 299. In some examples, one or more of the trackable markers 299 are positioned on and/or attached to one or more of the sidewalls 204 via an adhesive, fastener, and/or other mechanism. In some examples, one or more of the trackable markers 299 are etched and/or painted onto one or more of the sidewalls 204 (e.g., via laser, sharp object, pencil, pen, paintbrush, etc.). While shown as pattern markers in the examples of FIGS. 2a-4, in some examples, one or more of the trackable markers 299 may additionally, or alternatively, comprise reflective markers and/or light emitting markers (e.g., light emitting diodes (LEDs)).

In some examples, the torch mounts 202 are configured to maximize the chance that at least one trackable marker 299 (and/or sidewall 204) will be clearly visible to a tracking sensor 452 (and/or identifiable in captured sensor data) regardless of the orientation of the TIG torch 100. In particular, as shown in FIGS. 2a-2b, the two torch mounts 202 are configured to be as being rotationally offset from one another (e.g., by approximately 45 degrees about a central longitudinal axis 201 of the torch mounts 202 and/or tracking attachment 200). In the depicted configuration, no sidewall 204 of either torch mount 202 extends parallel to any other sidewall 204 of the other torch mount 202, which helps to ensure that at least one sidewall 204 and/or trackable marker 299 will be visible and/or detectable/identifiable at any angular orientation of the TIG torch 100 (e.g., relative to a central longitudinal axis 107 of the handle 106 of the TIG torch 100).

In some examples, a single torch mount 202 may be used instead of multiple torch mounts 202. FIG. 8, for example, shows a fourth alternative TIG torch tracking attachment 800 comprising a single fourth alternative torch mount 802 with six sidewalls 204. While the six sidewalls of the one fourth alternative torch mount 802 of FIG. 8 is less than the eight sidewalls 204 of the two torch mounts 202 of FIG. 2a, it is still enough to minimize the chance that no sidewall 204 and/or trackable marker 299 will be visible and/or detectable/identifiable at a particular angular orientation of the TIG torch 100.

However, in some examples, the increase in the number of sidewalls 204 on the fourth alternative torch mount 802 comes with an increase in the size of the fourth alternative torch mount 802. In some examples, this increase in size can cause a corresponding increase in the weight of/on the TIG torch 100, which can impact operator handling and/or welding technique. Additionally, or alternatively, the increase in size can cause a change in a center of gravity of the TIG torch 100, which can also impact operator handling and/or welding technique. Thus, there is a tradeoff that comes with increasing the number of sidewalls 204 (and/or trackable markers 299) on/of the torch mount 202.

In some examples, fewer sidewalls 204 on/of the torch mount 202 can be correlated with smaller size, weight, and/or impact on the TIG torch 100. FIGS. 6-7, for example, show a second alternative TIG torch tracking attachment 600 and third alternative TIG torch tracking attachment 700 with second alternative torch mounts 602 that each have three sidewalls 204. However, fewer sidewalls 204 can also mean an increased chance that no sidewall 204 and/or trackable marker 299 will be visible and/or detectable/identifiable at a particular angular orientation of the TIG torch 100.

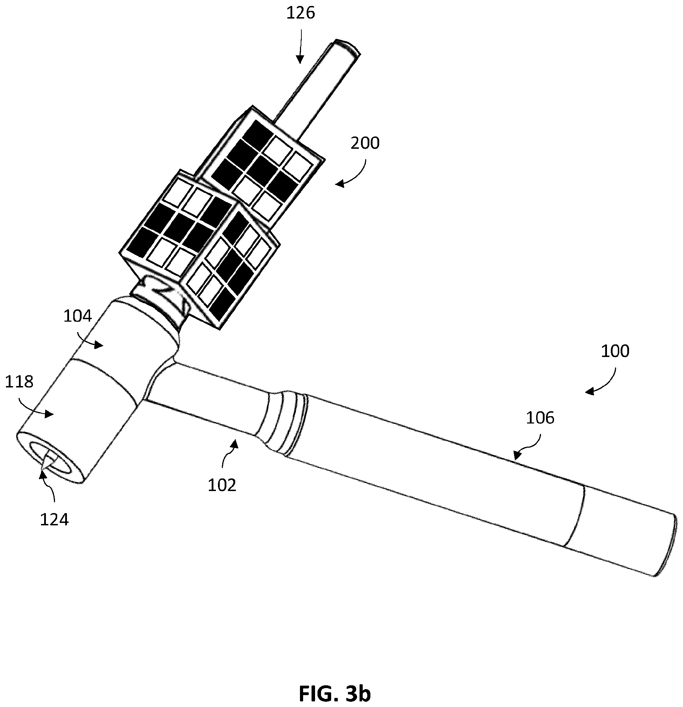

FIG. 3b shows the TIG torch 100 with the TIG torch tracking attachment 200 mounted and/or attached to the back cap 126 of the TIG torch 100. In the examples of FIGS. 2a-2b, the torch mount 202a of the TIG torch tracking attachment 200 is shown with an end wall 206 having an aperture that leads to an internal passage 208 that is configured to receive, fit, and/or accommodate the back cap 126. As shown, the internal passage 208 is defined by internal walls of the torch mounts 202, and extends through an approximate center of the torch mounts 202 (and/or along a central axis of the torch mounts 202). In the example of FIG. 3b, the back cap 126 of the TIG torch 100 is shown extending through the TIG torch tracking attachment 200 to attach the TIG torch tracking attachment 200 to the TIG torch 100.

As noted above, in some examples, the back cap 126 of the TIG torch 100 is collinear, concentric, and/or aligned with the tungsten electrode 124. Additionally, as noted above, in some examples, the back cap 126 extends through an approximate center of the torch mounts 202 of the TIG torch tracking attachment 200, making the torch mounts 202 and the TIG torch tracking attachment 200 collinear, concentric, and/or aligned with the back cap 126 of the TIG torch 100. Because of this, in some examples, the (e.g., central longitudinal axis 201 of the) torch mounts 202 and the TIG torch tracking attachment 200 are also collinear, concentric, and/or aligned with the tungsten electrode 124 of the TIG torch 100.

In some examples, this collinear, concentric, and/or aligned configuration with the (e.g., tip of the) tungsten electrode 124 makes it easier for the tracking/monitoring system 450 to determine an orientation of the TIG torch 100 and/or the (e.g., tip of the) tungsten electrode 124. For example, if each trackable marker 299 is oriented in a direction parallel to the longitudinal axis 201 of the tracking attachment 200 (which is relatively easy as each sidewall 204 of the tracking attachment 200 is parallel to the longitudinal axis 201), then the monitoring system 450 can determine the orientation of the TIG torch 100 and/or the (e.g., tip of the) tungsten electrode 124 to be the same as the orientation of any identified trackable marker 299. In some examples, the orientation of the TIG torch 100 and/or the (e.g., tip of the) tungsten electrode 124 can be important for determination of one or more technique parameters (e.g., work angle, travel angle, aim, etc.).

In some examples, the position of the TIG torch 100 and/or the (e.g., tip of the) tungsten electrode 124 can also be important for determination of one or more technique parameters (e.g., tip to work distance, travel speed, travel direction, etc.). In some examples, a calibration process may be performed to identify an offset distance and/or an offset direction (e.g., represented by one or more vectors extending) between each trackable marker 299 and the tip of the tungsten electrode 124 (and/or one or more other points on the TIG torch 100). In some examples, the offset distance(s), offset direction(s), and/or corresponding vector(s) are stored in memory circuitry 458 and/or used (e.g., by the processing circuitry 456) to determine the position(s) of the TIG torch 100 and/or the (e.g., tip of the) tungsten electrode 124 based on the position(s) of the trackable marker(s) 299 of the tracking attachment 200.

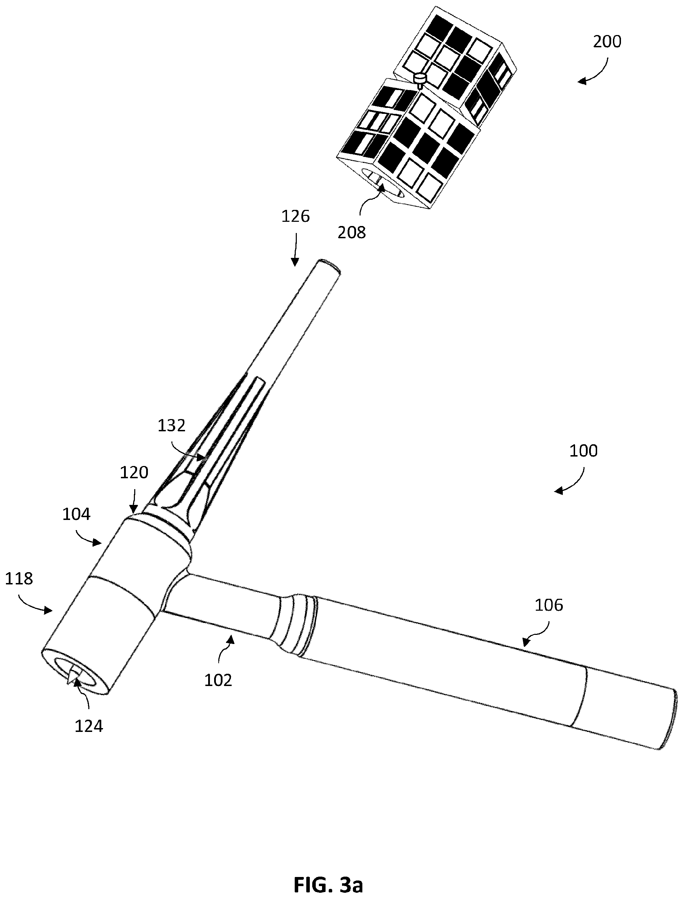

In some examples, the internal passage 208 of the tracking attachment 200 is sized to snugly fit the back cap 126, so that the tracking attachment 200 is secured to the back cap 126 through friction. In the example of FIG. 2b, grooves 210 are shown formed on the internal walls of the tracking attachment 200, around the internal passage 208. As shown, the shape of the grooves 210 closely correspond to the shape of protrusions 132 on the back cap 126 (see, e.g., FIGS. 1a-1b and 3a), such that the protrusions 132 will snugly fit into and/or slide through the grooves 210. In some examples, this configuration may help to encourage the frictional fit between the grooves 210 of the tracking attachment 200 and the protrusions 132 of the back cap 126.

In some examples, the internal walls of the tracking attachment 200 encircling the internal passage 208 are formed of a flexible, deformable, and/or bendable material (e.g., rubber). In some examples, having the internal walls of the tracking attachment 200 formed of a flexible material allows for the internal walls of the tracking attachment 200 encircling the internal passage 208 to bend, bow, deform, and/or otherwise accommodate larger back caps 126 in the internal passage 208.

In the examples of FIGS. 2a-2b, the tracking attachment 200 additionally includes a torch mount fastener 212. The torch mount fastener 212 is shown extending through the lower torch mount 202a into the internal passage 208. In some examples, the torch mount fastener 212 comprises a snap on fastener, a threaded fastener, a screw fastener, a clamp fastener, a spring fastener, and/or an inflatable fastener. In some examples, the torch mount fastener 212 modifies (e.g., expands/broadens and/or contracts/restricts) a diameter of the internal passage 208. In some examples, by modifying the diameter of the internal passage 208 via the torch mount fastener 212, and/or forming the surrounding walls of the internal passage 208 from flexible material, the tracking attachment 200 is ensured to have a snug and/or frictional fit with the back cap 126, regardless of whether the back cap 126 is big or small.

In some examples, the tracking attachment 200 may be molded to, and/or otherwise integrated with, the back cap 126. FIG. 5, for example, shows a first alternative TIG torch tracking attachment 500 where a the back cap 126 is molded to, and/or otherwise integrated with, first alternative torch mounts 502 of the first alternative TIG torch tracking attachment 500. In some examples, the first alternative back cap 126 still extends through the center of the first alternative TIG torch tracking attachment 500 even when integrated, thereby retaining the concentricity arrangement with the tungsten electrode 124.

However, in some examples, there is no need to accommodate different sized back caps 126 when the first alternative back cap 126 is integrated with the first alternative TIG torch tracking attachment 500, as the first alternative TIG torch tracking attachment 500 cannot be removed from the first alternative back cap 126 (at least not without breaking it). Thus, in some examples where the tracking attachment 200 may be molded to, and/or otherwise integrated with, the back cap 126, the torch mount fastener 212 may be omitted.

FIG. 8 shows an example of a fourth alternative TIG torch tracking attachment 800 where the fourth alternative tracking mount 202 is also integrated with the back cap 126. While trackable markers 299 are not shown in the alternative examples of FIGS. 5-8 for the sake of efficiency, it should be understood that trackable markers 299 might be positioned on the sidewalls 204 in the same way as described above with respect to the torch mounts 202 and/or tracking attachment 200 of FIGS. 2a-2b.

The disclosed example TIG torch tracking attachment 200 allows for trackable markers 299 to be easily attached to a TIG torch 100, thereby removing the need for costly customized/modified TIG torches. In some examples, the tracking attachment 200 includes one or more trackable markers 299 that can be relatively easily detected and/or tracked by a monitoring system 450. In some examples, the trackable marker(s) 299 of the tracking attachment 200 facilitate tracking and/or monitoring of operator technique by the monitoring system 450, by aiding in the tracking and/or monitoring of the position(s)/orientation(s) of the (e.g., tungsten tip of the) TIG torch 100 by the monitoring system 450.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "about" and/or "approximately," when used to modify or describe a value (or range of values), position, orientation, and/or action, mean reasonably close to that value, range of values, position, orientation, and/or action. Thus, the examples described herein are not limited to only the recited values, ranges of values, positions, orientations, and/or actions but rather should include reasonably workable deviations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used, herein, the term "memory," "memory circuitry," and/or "memory device" means computer hardware or circuitry to store information for use by a processor and/or other digital device. The memory, memory circuitry, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory, memory circuitry, and/or memory device can be configured to store code, instructions, applications, software, firmware and/or data, and may be external, internal, or both with respect to the processor.

As used herein, the term "processor" and/or "processing circuitry" means processing devices, apparatus, programs, circuits, components, systems, and subsystems, whether implemented in hardware, tangibly embodied software, or both, and whether or not it is programmable. The term "processor" and/or "processing circuitry" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor and/or processing circuitry may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

The term "power" is used throughout this specification for convenience, but also includes related measures such as energy, current, voltage, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

Certain embodiments of the invention are described in the following clauses:
Clause 1. A tracking attachment for a tungsten inert gas (TIG) torch, the tracking attachment comprising:
   a torch mount integrated with, or configured for connection to, a back cap of the TIG torch, the torch mount comprising a trackable marker configured for detection by a tracking system.
Clause 2. The tracking attachment of clause 1, wherein the trackable marker is attached to the torch mount via an adhesive or a fastener, or the trackable marker is etched onto the torch mount.
Clause 3. The tracking attachment of clause 1, wherein the torch mount is integrated with, or configured for connection to, the back cap of the TIG torch such that the back cap extends through an approximate center of the torch mount, thereby making the torch mount concentric with the back cap and concentric with a tungsten tip of the TIG torch.
Clause 4. The tracking attachment of clause 1, wherein the torch mount comprises an internal passage defined by a passage wall, the back cap extending through the internal passage when the torch mount is connected to the back cap.
Clause 5. The tracking attachment of clause 4, wherein the passage wall comprises a rubber material, such that the torch mount passage wall can bend or deform to accommodate larger back caps, or the tracking attachment further comprises a torch mount fastener that secures the torch mount to the back cap.
Clause 6. The tracking attachment of clause 1, wherein the torch mount comprises a first torch mount, the tracking attachment further comprising a second torch mount, the second torch mount also being integrated with, or configured for connection to, the back cap of the TIG torch.
Clause 7. The tracking attachment of clause 6, wherein the first torch mount comprises a first end wall and three or more first sidewalls, the second torch mount comprises a second end wall and three or more second sidewalls, and the first torch mount is rotationally offset from the second torch mount about a central axis of the first torch mount or second torch mount, such that none of the three or more first sidewalls extend parallel to any of the three or more second sidewalls.
Clause 8. A tungsten inert gas (TIG) torch, comprising:
   a torch handle;
   a torch neck connected to the torch handle;
   a torch head connected to the torch neck;
   a tungsten electrode positioned at least partially within, and extending from a first side of, the torch head;
   a back cap connected to, and extending from, a second side of the torch head, opposite the first side, the back cap being concentric with the tungsten electrode; and
   a torch mount integrated with, or connected to, the back cap, the torch mount comprising a trackable marker configured for detection by a tracking system.
Clause 9. The TIG torch of clause 8, wherein the trackable marker is attached to the torch mount via an adhesive or a fastener, or the trackable marker is etched onto the torch mount.
Clause 10. The TIG torch of clause 8, wherein the torch mount is integrated with, or connected to, the back cap of the TIG torch such that the back cap extends through an approximate center of the torch mount, thereby making the torch mount concentric with the back cap and concentric with the tungsten tip of the TIG torch.
Clause 11. The TIG torch of clause 8, wherein the torch mount comprises an internal passage defined by a passage wall, the back cap extending through the internal passage when the torch mount is connected to the back cap.
Clause 12. The TIG torch of clause 11, wherein the passage wall comprises a rubber material, such that the passage wall can bend or deform to accommodate larger back caps, or the TIG torch further comprises a torch mount fastener that secures the torch mount to the back cap.
Clause 13. The TIG torch of clause 8, wherein the torch mount comprises a first torch mount, the tracking attachment further comprising a second torch mount, the second torch mount also being integrated with, or configured for connection to, the back cap of the TIG torch.
Clause 14. The TIG torch of clause 13, wherein the first torch mount comprises a first end wall and three or more first sidewalls, the second torch mount comprises a second end wall and three or more second sidewalls, and the first torch mount is rotationally offset from the second torch mount about a central axis of the first torch mount or second torch mount, such that none of the three or more first sidewalls extend parallel to any of the three or more second sidewalls.
Clause 15. A welding system, comprising:
   a tracking attachment for a tungsten inert gas (TIG) torch, the tracking attachment comprising:
   a torch mount comprising a trackable marker that can be detected by a tracking system, the torch mount being integrated with, or configured for connection to, a back cap of the TIG torch.
Clause 16. The welding system of clause 15, wherein the torch mount is integrated with, or configured for connection to, the back cap of the TIG torch such that the back cap extends through an approximate center of the torch mount, thereby making the torch mount concentric with the back cap and concentric with a tungsten tip of the TIG torch.
Clause 17. The welding system of clause 15, wherein the torch mount comprises an internal passage defined by a passage wall, the back cap extending through the internal passage when the torch mount is connected to the back cap, the passage wall comprising a rubber material, such that the passage wall can bend or deform to accommodate larger back caps, or the welding system further comprises a torch mount fastener that secures the torch mount to the back cap.
Clause 18. The welding system of clause 15, wherein the torch mount comprises a first torch mount, the tracking attachment further comprising a second torch mount, the second torch mount also being integrated with, or configured for connection to, the back cap of the TIG torch.
Clause 19. The welding system of clause 15, further comprising the TIG torch, the TIG torch comprising:
   a torch handle,
   a torch neck connected to the torch handle,
   a torch head connected to the torch neck,
   a tungsten electrode positioned at least partially within, and extending from a first side of, the torch head, and
   a back cap connected to, and extending from, a second side of the torch head, opposite the first side, the back cap being concentric with the tungsten electrode.
Clause 20. The welding system of clause 1, further comprising the tracking system, the tracking system comprising:
   a tracking sensor configured to capture tracking sensor data,
   processing circuitry configured to:
      analyze the tracking sensor data to identify a marker position or a marker orientation of the trackable marker,
      identify a tungsten electrode position or a tungsten electrode orientation of a tungsten electrode of the TIG torch based on the marker position or the marker orientation,
      determine a welding technique parameter based on the tungsten electrode position or the tungsten electrode orientation, and
   a user interface configured to output the welding technique parameter.

## Claims

1. A tracking attachment for a tungsten inert gas (TIG) torch, the tracking attachment comprising:
a torch mount integrated with, or configured for connection to, a back cap of the TIG torch, the torch mount comprising a trackable marker configured for detection by a tracking system.

2. The tracking attachment of claim 1, wherein the trackable marker is attached to the torch mount via an adhesive or a fastener, or the trackable marker is etched onto the torch mount.

3. The tracking attachment of claim 1 or claim 2, wherein the torch mount is integrated with, or configured for connection to, the back cap of the TIG torch such that the back cap extends through an approximate center of the torch mount, thereby making the torch mount concentric with the back cap and concentric with a tungsten tip of the TIG torch.

4. The tracking attachment of any one of claims 1 to 3, wherein the torch mount comprises an internal passage defined by a passage wall, the back cap extending through the internal passage when the torch mount is connected to the back cap, and optionally
wherein the passage wall comprises a rubber material, such that the torch mount passage wall can bend or deform to accommodate larger back caps, or the tracking attachment further comprises a torch mount fastener that secures the torch mount to the back cap.

5. The tracking attachment of any one of claims 1 to 4, wherein the torch mount comprises a first torch mount, the tracking attachment further comprising a second torch mount, the second torch mount also being integrated with, or configured for connection to, the back cap of the TIG torch, and optionally
wherein the first torch mount comprises a first end wall and three or more first sidewalls, the second torch mount comprises a second end wall and three or more second sidewalls, and the first torch mount is rotationally offset from the second torch mount about a central axis of the first torch mount or second torch mount, such that none of the three or more first sidewalls extend parallel to any of the three or more second sidewalls.

6. A tungsten inert gas (TIG) torch, comprising:
a torch handle;
a torch neck connected to the torch handle;
a torch head connected to the torch neck;
a tungsten electrode positioned at least partially within, and extending from a first side of, the torch head;
a back cap connected to, and extending from, a second side of the torch head, opposite the first side, the back cap being concentric with the tungsten electrode; and
a torch mount integrated with, or connected to, the back cap, the torch mount comprising a trackable marker configured for detection by a tracking system.

7. The TIG torch of claim 6, wherein the trackable marker is attached to the torch mount via an adhesive or a fastener, or the trackable marker is etched onto the torch mount, and/or wherein the torch mount is integrated with, or connected to, the back cap of the TIG torch such that the back cap extends through an approximate center of the torch mount, thereby making the torch mount concentric with the back cap and concentric with the tungsten tip of the TIG torch.

8. The TIG torch of claim 6 or claim 7, wherein the torch mount comprises an internal passage defined by a passage wall, the back cap extending through the internal passage when the torch mount is connected to the back cap, and optionally
wherein the passage wall comprises a rubber material, such that the passage wall can bend or deform to accommodate larger back caps, or the TIG torch further comprises a torch mount fastener that secures the torch mount to the back cap.

9. The TIG torch of any one of claims 6 to 8, wherein the torch mount comprises a first torch mount, the tracking attachment further comprising a second torch mount, the second torch mount also being integrated with, or configured for connection to, the back cap of the TIG torch, and optionally
wherein the first torch mount comprises a first end wall and three or more first sidewalls, the second torch mount comprises a second end wall and three or more second sidewalls, and the first torch mount is rotationally offset from the second torch mount about a central axis of the first torch mount or second torch mount, such that none of the three or more first sidewalls extend parallel to any of the three or more second sidewalls.

10. A welding system, comprising:
a tracking attachment for a tungsten inert gas (TIG) torch, the tracking attachment comprising:
a torch mount comprising a trackable marker that can be detected by a tracking system, the torch mount being integrated with, or configured for connection to, a back cap of the TIG torch.

11. The welding system of claim 10, wherein the torch mount is integrated with, or configured for connection to, the back cap of the TIG torch such that the back cap extends through an approximate center of the torch mount, thereby making the torch mount concentric with the back cap and concentric with a tungsten tip of the TIG torch.

12. The welding system of claim 10 or claim 11, wherein the torch mount comprises an internal passage defined by a passage wall, the back cap extending through the internal passage when the torch mount is connected to the back cap, the passage wall comprising a rubber material, such that the passage wall can bend or deform to accommodate larger back caps, or the welding system further comprises a torch mount fastener that secures the torch mount to the back cap.

13. The welding system of any one of claims 10 to 12, wherein the torch mount comprises a first torch mount, the tracking attachment further comprising a second torch mount, the second torch mount also being integrated with, or configured for connection to, the back cap of the TIG torch.

14. The welding system of any one of claims 10 to 13, further comprising the TIG torch, the TIG torch comprising:
a torch handle,
a torch neck connected to the torch handle,
a torch head connected to the torch neck,
a tungsten electrode positioned at least partially within, and extending from a first side of, the torch head, and
a back cap connected to, and extending from, a second side of the torch head, opposite the first side, the back cap being concentric with the tungsten electrode.

15. The welding system of any one of claims 10 to 14, further comprising the tracking system, the tracking system comprising:
a tracking sensor configured to capture tracking sensor data,
processing circuitry configured to:
analyze the tracking sensor data to identify a marker position or a marker orientation of the trackable marker,
identify a tungsten electrode position or a tungsten electrode orientation of a tungsten electrode of the TIG torch based on the marker position or the marker orientation,
determine a welding technique parameter based on the tungsten electrode position or the tungsten electrode orientation, and
a user interface configured to output the welding technique parameter.
